# EUROPEAN PATENT APPLICATION

(11) **EP 4 310 409 A1**
(43) Date of publication of application: **24.01.2024**
(21) Application number: 22185571.1
(22) Date of filing: 18.07.2022
(51) Int. Cl.: F24H 1/00, F24H 1/10, F24H 9/1818, H05B 3/44, B60H 1/22, H05B 3/06

(54) **AN ELECTRIC FLUID HEATER**

(71) Applicant: VALEO SYSTEMES THERMIQUES, 78320 Le Mesnil Saint-Denis (FR)
(72) Inventor: ANGHEL, Catalin-Doru, 10800 Prague (CZ); SKODA, Jiri, 10800 Prague (CZ)
(74) Representative: Valeo Systèmes Thermiques

(57) **Abstract**

An electrical heater (100) includes a housing (10), at least one heater coil (20), an inlet (12) and an outlet (14). The housing (10) is formed with a channel (10a) to receive the heater coil (20). The inlet (12) and the outlet (14) are for ingress and egress of fluid with respect to the housing (10). The electrical heater (100) includes at least one holding clip (30) received in the channel (10a) and holding the at least one heater coil (20) spaced away from inner walls (10b) of the channel (10a). The holding clip (30) includes at least one clamping portion (33) defined between a pair of clamping tongs (32) disposed between a pair of urging tongs (34) urged against the sidewalls (10b) to urge clamping tongs (32) towards each other.

## Description

The present invention relates to an electrical fluid heater, more specifically, the present invention relates to an electrical fluid heater for a vehicle.

An electrical heater includes a housing, heater coil and a Printed Circuit Board (PCB). The housing includes side walls and a top and a bottom covers. The housing further includes a channel formed thereon for receiving electrical heater coil. The channel is generally formed on one side and is accessible by removing at least one of the covers. Generally, one end of the heater coil acts as positive terminal whereas other end of the electrical heater coil acts as negative terminal to cause current to flow through the heater coil for heating of the heater coil. The power supply to the heater coil is controlled by the PCB received in the housing. The housing further includes inlet port and outlet port for ingress and egress of fluid, the fluid after entering inside the housing flows around the heater coil received in the channel to extract heat from the heater coil and egresses out of the housing after undergoing heat exchange and extracting heat from the heater coil.

The channel generally receives a single heater coil or multiple heater coils to increase the heating capacity of electrical fluid heater. The heating capacity of the electrical fluid heater is directly proportional to surface area of the heater coils that depends on the length of the heater coils and the number of the heater coils. In order to increase the length of the heater coil within limited packaging space, the channel and the heater coil received in the channel follows a torturous path with number of turns between the ends. In case multiple heater coils are disposed in limited space inside the channel to increase the heating capacity, the packaging and routing of the multiple heater coils in limited space inside the channel is a problem. Further, in case multiple heater coils are packaged in limited space within the channel, the heater coils are required to be maintained spaced apart from each other and spaced from the inner walls of the channel to prevent short circuiting.

Accordingly, there is a need for an electrical heater with an arrangement for securely holding at least one heater coil in limited space inside the channel without danger of short-circuiting.

Yet another object of the present invention is to provide an electrical heater with multiple heater coils provided with an arrangement for maintaining the heater coils spaced apart from each other and inner walls of the channel even when the heater coils are received in limited space inside the channel.

An object of the present invention to obviate drawbacks associated with conventional electrical heaters, particularly, routing and packaging issues associated with packaging of multiple heater coils in limited space inside the channel.

Another object of the present invention is to provide an electrical heater that ensures thermal insulation between multiple heater coils and thermal insulation between the heater coils and the channel.

Still another object of the present invention is to provide an electrical heater that exhibits comparatively more service life and requires comparatively less maintenance than conventional electrical heaters.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

An electrical heater includes a housing, at least one heater coil, an inlet and an outlet. The housing is formed with a channel. The at least one heater coil is received within the channel. The inlet is for ingress of fluid inside the housing and surrounding the heater coil. The outlet is for egress of fluid from the housing after the fluid had extracted heat from the heater coil. The electrical heater further includes at least one holding clip received in the channel and hold the at least one heater coil within the channel in spaced apart relation with respect to inner walls of the channel. The holding clip includes at least one clamping portion defined between a pair of clamping tongs disposed between a pair of urging tongs that are urged against inner walls of the channel to urge the clamping tongs towards each other.

Generally, the clamping tongs include first legs connected at first ends thereof, whereas the second ends of the first legs are connected to the urging tongs.

Further, the urging tongs include second legs, wherein first ends of the second legs are connected to the corresponding second ends of the first legs and the second ends of the second legs are free ends that are urged against the inner walls of the channel.

Particularly, at least one of the first legs is having a wave profile with a first crest portion disposed between adjacent trough portions formed on one of the first legs and a second crest portion disposed between adjacent trough portions formed on the other first leg.

Generally, the opposing trough portions formed on the respective first legs define the clamping portion there-between.

Preferably, the clamping portion holds the heater coil centrally with respect to a width 'w' of the channel.

Further, clamping portion is of dimension that is less than the diameter of corresponding heater coil received therein.

Furthermore, the clamping portion includes a lining of insulating material provided at an inside wall thereof.

In accordance with an embodiment, the holding clip includes multiple clamping portions uniformly spaced with respect to each other, each clamping portion receiving and holding individual heater coil therein to enable holding of multiple heater coils spaced away from each other.

Generally, the multiple clamping portions are equally distributed on opposite sides of a plane passing through center of a depth "d" of the channel.

Particularly, the clamping portions are of same dimensions and accordingly hold heater coils of equal diameters.

Further, at least one of the second legs is having a straight profile.

Preferably, at least one of the second legs are diverging from the first legs.

Generally, at least one of the second legs is bent inwardly.

Specifically, at least one of the first legs is formed with a slot that extends across the bent.

In accordance with a preferred embodiment, the electrical fluid heater includes at least two heater coils and the holding clip holds and maintains the two heater coils spaced apart from each other.

Particularly, the holding clip engages with and holds the two heater coils within the channel in spaced apart relation with respect to inner walls of the channel.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates an isometric view of an electrical fluid heater in accordance with an embodiment of the present invention;
FIG. 2 illustrates an isometric view of the electrical fluid heater of FIG. 1 without a cover for depicting internal details, such as channel formed on a housing of the electrical fluid heater;
FIG. 3 illustrates an isometric view of the electrical fluid heater of FIG. 1 without the side-walls and the cover;
FIG. 4 illustrates a sectional view of the electric fluid heater of FIG. 1 depicting the heater coils held within a respective channel by means of a holding clip;
FIG. 5 illustrates an isometric view of the holding clip of FIG. 4; and
FIG. 6 illustrates a front view of the holding clip of FIG. 5.

It must be noted that the figures disclose the invention in a detailed enough way to be implemented, said figures helping to better define the invention if needs be. The invention should however not be limited to the embodiment disclosed in the description.

Although the present invention is explained with an example of electrical fluid heater for use in vehicle, wherein at least one heater coil is received and held within a limited space inside a channel formed on a housing of the electrical fluid heater. However, the present invention is also applicable for any vehicular or non-vehicular applications, wherein at least one heater coil is required to be held spaced apart from inner walls of a channel formed on a housing and in case of multiple heater coils, the heater coils are also required to be held spaced from each other.

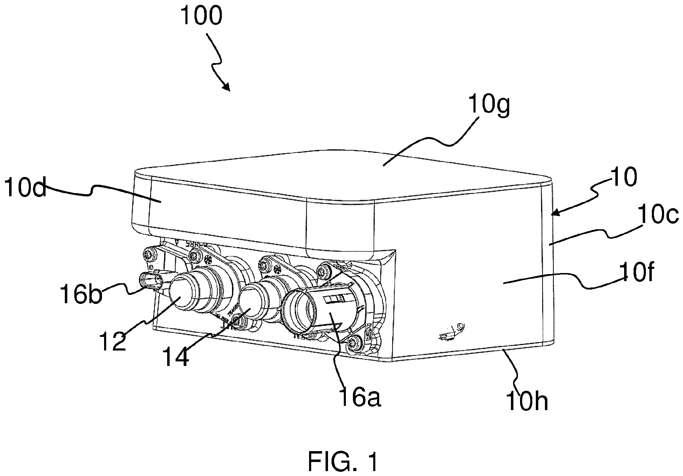

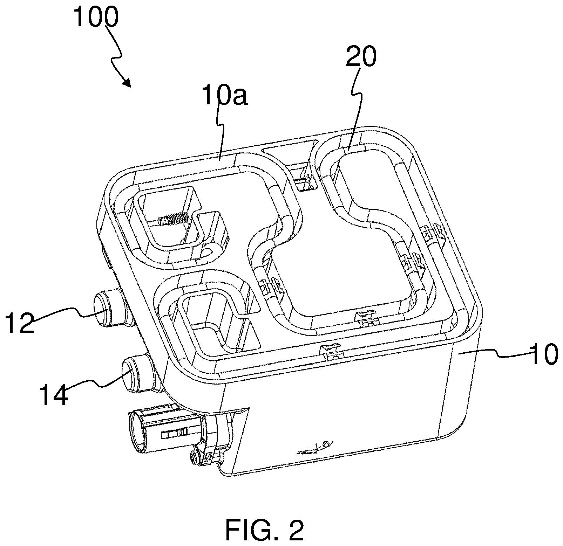

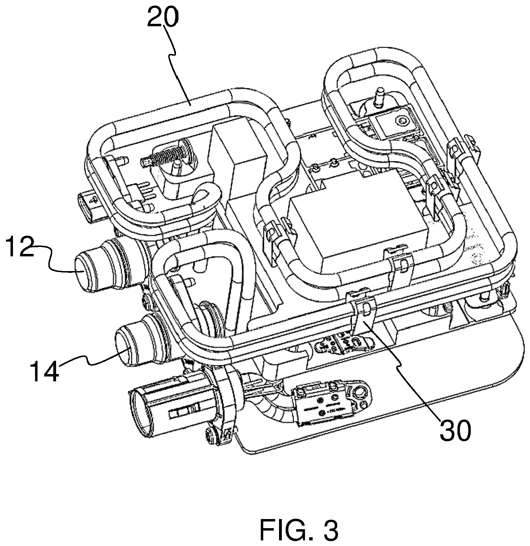

FIG. 1 illustrates an isometric view of an electrical fluid heater 100 in accordance with an embodiment of the present invention. FIG. 2 illustrates an isometric view of the electrical fluid heater 100 without a cover 10h for depicting internal details of the electrical fluid heater 100, such as a channel 10a formed on a housing 10. FIG. 3 illustrates an isometric view of the electrical fluid heater 100 without the side-walls and the cover 10g. The electrical fluid heater 100 includes the housing 10, at least one heater coil 20, an inlet nozzle 12 and an outlet nozzle 14.

Referring to the FIG. 1, the housing 10 includes a pair of opposite front and rear walls 10c and 10d, a pair of opposite sidewalls 10e and 10f and a pair of opposite top cover 10g and bottom cover 10h. The walls and the covers together define an enclosure for receiving a PCB 50, the channel 10a and the fluid to be heated around the channel 10a. The top and bottom covers 10g and 10h are removable to access an interior of the housing 10 for inspection and maintenance. Generally, the housing 10 is formed with the channel 10a that is preferably formed on one side of the housing. However, the present invention is not limited any particular configuration of the housing 10 as far as the housing 10 defines an enclosure for receiving the PCB 50, the channel 10a and the fluid to be heated around the channel 10a. The PCB 50 controls the heating of the heater coil 20 by controlling the current supplied to the heater coil 20. Also, the channel 10a can be formed on any one side or extend to multiple sides of the housing 10. The channel 10a is having rectangular cross section. However, the present invention is not limited to any particular configuration and placement of the channel formed on the housing 10 as far as the channel 10a is capable of receiving and securely holding the heater coil 20 therein to enable heat exchange between the fluid flowing around the channel 10a with the heater coil 20 received inside the channel 10a. The inlet nozzle 12 and the outlet nozzle 14 are formed on one of the sides of the housing, preferably the sidewall 10d of the housing 10. The side wall 10d further includes at least one electrical connector 16a and 16b for supplying electrical power to the heater coils 20 via the PCB 50 after being regulated by the PCB 50. More specifically, the electric power is transmitted from the electrical connector 16a and 16b to the PCB 50 and thereafter to the resistance inside the heater coils 20 after being regulated by the PCB 50. The inlet nozzle 12 is for ingress of fluid inside the housing 10, particularly, the inlet nozzle 12 supplies fluid to the fluid flow passages inside the housing 10 around the heater coil 20 received inside the channel 10a to extract heat from the heater coil 20 received in the channel 10a. More specifically, the fluid entering the hosing 10 via the inlet nozzle 12 is supplied to the annular space between the heater coils 20 and the inner walls 10b of the channel 10a. The outlet nozzle 14 is for the egress of the fluid from the electrical fluid heater 100 after the fluid had undergone heat exchange and extracted heat from the heater coil 20. However, the present invention is not limited to the number and placement of the inlet nozzle 12, the outlet nozzle 14 and the electrical connectors 16a and 16b.

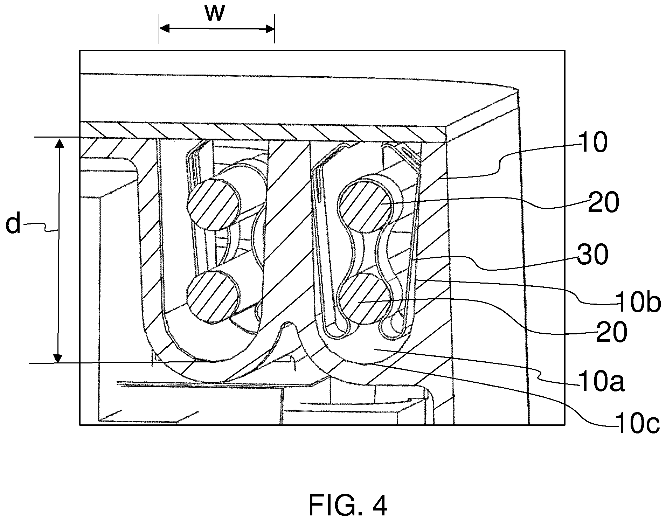

The heater coil 20 has one end connected to positive terminal and another end connected to negative terminal to allow current flow there through to cause heating of the heater coil 20. Preferably, the heating coil 20 includes a main portion 20a and a connection portion 20b orthogonal to the main portion 20a. Generally, the main portion 20a is at least 80 percent, particularly, 90 percent of the total length of the corresponding heater coil 20. Preferably, the main portion 20a is received in channel 10a. The channel 10a can receive either a single heater coil 20 or multiple heater coils 20 therein. In case, single heater coil 20 is received within the channel 10a, the heater coil 20 is required to be arranged in spaced apart relation with respect to inner walls 10b of the channel 10a. The heating capacity of the electrical fluid heater 100 is directly proportional to surface area of the heater coils 20 that depends on the length of the heater coil 20 and the number of the heater coils 20. In order to increase the length of the heater coil 20 received within limited packaging space of the channel 10a, the channel 10a and the heater coil 20 received in the channel 10a follows a torturous path with number of turns. To further increase the surface area of the heat coil, multiple heater coils 20 are disposed within limited space of the channel 10a. In case, multiple heater coils 20 are received inside the channel 10a, the heater coils 20 are required to be securely held inside the channel 10a in spaced apart configuration with respect to each other and with respect to the inner walls 10b of the channel 10a. Particularly, at least one holding clip 30 is disposed within the channel 10a to hold the heater coils 20 inside the channel 10a. Referring to the FIG. 4, the holding clip 30 holds and maintains the heater coils 20 at desired spacing with respect to inner walls 10b of the channel 10a. Particularly, the holding clip 30 includes multiple clamping portions 33 uniformly spaced with respect to each other, each clamping portion 33 receiving and holding an individual heater coil 20 therein to enable holding of multiple heater coils 20 spaced away from each other in confined space within the channel 10a. In a preferred embodiment, multiple holding clips 30 are disposed inside the channel 10a at regular intervals to hold the multiple heater coils 20 spaced away from each other and from inner walls 10b of the channel 10a. In accordance with a preferred embodiment, the electrical fluid heater 100 includes at least two heater coils 20 and the holding clip 30 holds and maintains the two heater coils 20 spaced apart from each other. Particularly, the holding clip 30 engages with and holds the two heater coils 20 within the channel 10a in spaced apart relation with respect to inner walls 10b of the channel 10a.

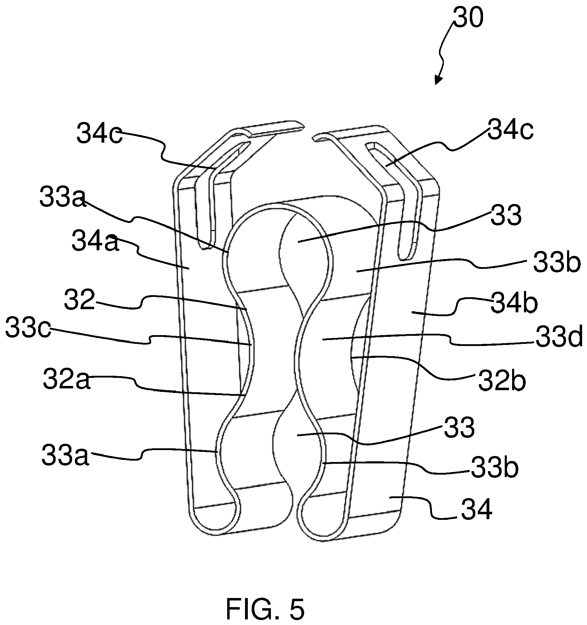

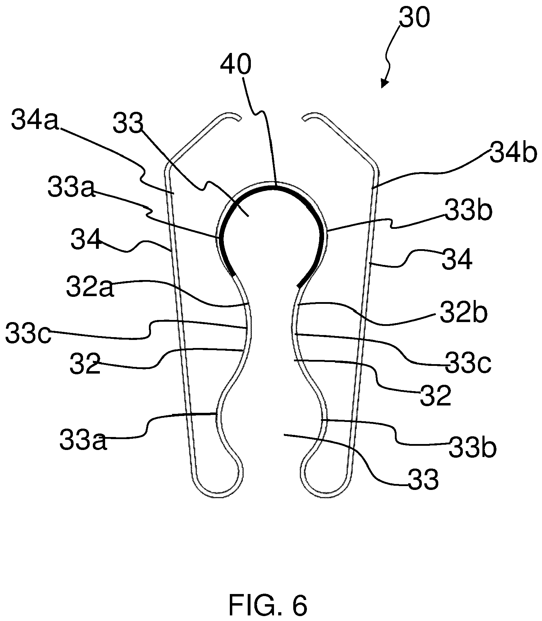

Referring to FIG. 5 and FIG. 6, the holding clip 30 includes at least one clamping portion 33 defined between a pair of clamping tongs 32 that are disposed between a pair of urging tongs 34. The urging tongs 34 are urged against inner walls 10b of the channel 10a to urge the clamping tongs 32 towards each other.

Generally, the clamping tongs 32 include first legs 32a and 32b connected at first ends thereof, whereas, the second ends of the first legs 32a and 32b are connected to the urging tongs 34. Particularly, at least one of the first legs 32a and 32b is having a wave profile with a first crest portion 33c and a second crest portion 33d. The first crest portion 33c is disposed between adjacent trough portions 33a formed on one of the first legs 32a. The second crest portion 33d is disposed between adjacent trough portions 33b formed on the other first leg 32b. The opposing trough portions 33a and 33b formed on the respective first legs 32a and 32b define the clamping portion 33c and 33d there-between. Preferably, the clamping portion 33 holds the heater coil 20 centrally with respect to a width 'w' of the channel 10a. Further, clamping portion 33 is of dimension that is less than the diameter of corresponding heater coil 20 received therein.

In accordance with an embodiment, multiple clamping portions 33 are formed that are uniformly spaced with respect to each other. Each of the multiple clamping portions 33 receives and holds separate heater coil 20 therein, thereby maintaining the multiple heater coils 20 spaced from each other. In one example, the multiple clamping portions 33 are equally distributed on opposite sides of a plane passing through center of a depth "d" of the channel 10a. Particularly, the clamping portions 33 are of same dimensions and accordingly hold heater coils 20 of equal diameters. However, the present invention is not limited to the configuration, number and placement of the clamping portions as far as the clamping portions are adapted to hold and maintain the multiple heater coils 20 spaced apart from each other and spaced apart from the inner walls of the channel 10a.

The urging tongs 34 include second legs 34a and 34b, wherein first ends of the second legs 34a and 34b are connected to the corresponding second ends of the first legs 32a and 32b and the second ends of the second legs 34a and 34b are free ends that are urged against the inner walls 10b of the channel 10a. Further, at least one of the second legs 34a and 34b is having a straight profile. Preferably, at least one of the second legs 34a and 34b is diverging from the corresponding first leg 32a and 32b. Generally, at least one of the second legs 34a and 34b is bent inwardly. Specifically, at least one of the second legs 34a and 34b is formed with a slot 34c that extends across the bent. Such configuration of the urging tongs 34 assists in easy insertion of the urging tongs 34 inside the channel 20. Further, providing slots 34c on the second legs 34a and 34b provide flexibility to the second legs 34a and 34b for easy flexing of the second legs 34a and 34b to urge the second legs 34a and 34b against the inner walls 10b of the channel 10a and to urge the first legs 32a and 32b towards each other for causing clamping of the heater coils 20 in the clamping portions 33a.

However, the present invention is not limited to configuration, number and placement of the holding clips 30 as far as the holding clips 30 are capable of holding the heater coils 20 spaced away from inner walls 10b of the channel 10a when received in the channel 10a. The channel 10a is of such configuration that a depth "d" of each channel 10a is at least 2.5 times diameter of the heater coil 20 in case two heater coils are disposed one underneath the other. Specifically, depth of the channel 10a is based on the number of the heater coils 20 arranged adjacent to each other along the same plane. Further, the channel 10a is of such configuration that a width "w" of each channel 10a at least 1.5 times diameter of the heater coil 20. With such configuration, the heater coils 20 are uniformly spaced with respect to each other along the length thereof and the heater coils 20 are spaced from the inner walls 10b of the channel 10a. Referring to the FIG. 4, the heater coils 20 are disposed centrally with respect to a width "w" of the channel 10a. Each of the heater coils 20 are on opposite sides of the center of a depth "d" of the channel 10a. The electrical fluid heater 100 further includes arrangement for electrically insulating the heater coils 20 with respect to each other and the walls of the channel 10a. The arrangement includes sleeves 40 of insulating material disposed between the heater coil 20 and the corresponding holding clips 30. Generally, the sleeve 40 is of ceramic material. In accordance with one embodiment either one of inside walls of the holding clips 30, particularly, the clamping portion 33 of the holding clips 30 or outside walls of the heater coil 20 held in the holding clips 30 is formed with a lining of ceramic material. Particularly, the clamping portion 33 includes the lining of insulating material provided at an inside wall thereof. However, the present invention is not limited to any particular arrangement for insulating the heater coils 20 with respect to the inside walls of the holding clips 30.

In any case, the invention cannot and should not be limited to the embodiments specifically described in this document, as other embodiments might exist. The invention shall spread to any equivalent means and any technically operating combination of means.

## Claims

1. An electrical fluid heater (100) comprising :
• a housing (10) formed with a channel (10a);
• at least one heater coil (20) adapted to be received within the channel (10a);
• an inlet (12) for ingress of fluid inside the housing (10) and surrounding the heater coil (20); and
• an outlet (14) for egress of fluid from the housing (10) after the fluid had extracted heat from the heater coil (20),
**characterized in that** the electrical heater (100) further comprises at least one holding clip (30) adapted to be received in the channel (10a) and hold the at least one heater coil (20) within the channel (10a) in spaced apart relation with respect to inner walls (10b) of the channel (10a), the holding clip (30) comprises at least one clamping portion (33) defined between a pair of clamping tongs (32) disposed between a pair of urging tongs (34) that are urged against the inner walls (10b) of the channel (10a) to urge the clamping tongs (32) towards each other.

2. The electrical fluid heater (100) as claimed in the previous claim, wherein clamping tongs (32) comprises first legs (32a) and (32b) connected at first ends thereof and second ends of the first legs (32a) and (32b) connected to the urging tongs (34).

3. The electrical fluid heater (100) as claimed in claim 2, wherein the urging tongs (34) comprises second legs (34a) and (34b), first ends of the second legs (34a) and (34b) are connected to the corresponding second ends of the first legs (32a) and (32b) and the second ends of the second legs (34a) and (34b) are free ends that are urged against the inner walls (10b) of the channel (10a).

4. The electrical fluid heater (100) as claimed in claim 2, wherein at least one of the first legs (32a) and (32b) is having a wave profile with a first crest portion (33c) disposed between adjacent trough portions (33a) formed on one of the first legs (32a) and a second crest portion (33d) disposed between adjacent trough portions (33b) formed on the other first leg (32b).

5. The electrical fluid heater (100) as claimed in the previous claim, wherein the opposing trough portions (33a) and (33b) formed on the respective first legs (32a) and (32b) define the clamping portion (33) there-between.

6. The electrical fluid heater (100) as claimed in any of the preceding claims, wherein the clamping portion (33) is adapted to hold the heater coil (20) centrally with respect to a width 'w' of the channel (10a).

7. The electrical fluid heater (100) as claimed in any of the preceding claims, wherein clamping portion (33) is of dimension that is less than the diameter of heater coil (20) received therein.

8. The electrical fluid heater (100) as claimed in any of the preceding claims, wherein the clamping portion (33) comprises lining (40) of insulating material provided on an inside wall thereof.

9. The electrical fluid heater (100) as claimed in any of the preceding claims, wherein the holding clip (30) comprises multiple clamping portions (33) uniformly spaced with respect to each other, each clamping portion (33) receiving and holding individual heater coil (20) therein to enable holding of multiple heater coils (20) spaced away from each other.

10. The electrical fluid heater (100) as claimed in the previous claim, wherein the multiple clamping portions (33) are equally distributed on opposite sides of a plane "A" passing through center of a depth "d" of the channel (10a).

11. The electrical fluid heater (100) as claimed in claim 9, wherein the multiple clamping portions (33) are of same dimensions and accordingly are adapted to hold heater coils (20) of equal diameters.

12. The electrical fluid heater (100) as claimed in claim 3, wherein at least one of the second legs (34a) and (34b) is having a straight profile.

13. The electrical fluid heater (100) as claimed in the previous claim, wherein at least one of the second legs (34a) and (34b) is diverging from the corresponding first leg (32a) and (32b).

14. The electrical fluid heater (100) as claimed in any of the preceding claims, wherein at least one of the second leg (34a) and (34b) is bent inwardly.

15. The electrical fluid heater (100) as claimed in the previous claim, wherein at least one of the second legs (34a) and (34b) is formed with a slot (34c) that extends across the bent.

16. The electrical fluid heater (100) as claimed in any of the preceding claims comprising at least two heater coils (20) and the holding clip (30) is adapted to hold and maintain the two heater coils (20) spaced apart from each other.

17. The electrical fluid heater (100) as claimed in the previous claim, wherein the holding clip (30) engages with and holds the two heater coils (20) within the channel (10a) in spaced apart relation with respect to inner walls (10b) of the channel (10a).
